# EUROPEAN PATENT APPLICATION

(11) **EP 2 287 072 A2**
(43) Date of publication of application: **23.02.2011**
(21) Application number: 10172117.3
(22) Date of filing: 06.08.2010
(51) Int. Cl.: B64C 11/18, B64C 23/06

(54) **Fluidfoil tip vortex disruption**

(30) Priority: 21.08.2009 GB 0914591
(71) Applicant: Rolls-Royce plc, London SW1E 6AT (GB)
(72) Inventor: Hussain, Zahid, Derby, Derbyshire DE3 9LP (GB); Sheaf, Christopher, Derby, Derbyshire DE3 0PF (GB)
(74) Representative: Barcock, Ruth Anita

(57) **Abstract**

A fluidfoil tip vortex disruption arrangement. There is a fluid inlet on a pressure side of the fluidfoil; and a fluid outlet in a low pressure region at or near the tip of the fluidfoil. Fluid exiting the fluid outlet inserts instability into a tip vortex to disrupt or destroy the vortex.

## Description

The present invention relates to tip vortex disruption for a fluidfoil. It finds utility for aerofoils or hydrofoils in applications including, but not limited to, gas turbine engine rotors, propellers, wind turbines and helicopters.

The term fluidfoil is used throughout to encompass aerofoil and hydrofoil.

Rotor blades, propeller blades and aeroplane wings are known to shed vortices into their wakes, which reduces propulsive efficiency and increases the acoustic signature of the blades or wings. It is therefore desirable, particularly in relation to aircraft where there are increasingly stringent environmental requirements, to reduce or remove the vortices. The vortices are predominantly shed from the tip of the fluidfoil, although other vortices are shed from the trailing edge.

Known methods of disrupting the tip vortices comprise mechanical tip modifications such as ailerons, counter-rotating propellers and winglets. For example, Cordier (US 6,607,168) proposes fitting a wing with toothed platelets at its free edges to break up tip vortices. However, such mechanical solutions increase parasitic drag losses, add mass at the tip thereby greatly increasing bending moments and stress, and are prone to damage from small scale impacts such as ice. Furthermore, the increased complexity of the fluidfoil increases cost for manufacture and repair.

Loth (US 2006/0006290) proposes active flow control to aerodynamically disrupt wing tip vortices. Perforations are provided through which air is supplied to change the boundary layer behaviour. However, this arrangement requires extra components to feed air to the perforations. Additionally, it is impractical and mechanically highly inefficient to apply Loth's teaching to rotating fluidfoils, such as propellers or rotors, since this would require fluid to be ducted into the rotating component, significantly increasing complexity and weight. A further problem with this arrangement is that the perforations are provided in a highly stressed component which therefore requires additional strengthening.

The present invention seeks to disrupt tip vortices of a fluidfoil and seeks to address the aforementioned problems with prior methods.

Accordingly the present invention provides a fluidfoil tip vortex disruption arrangement comprising a fluid inlet on a pressure side of the fluidfoil; and a fluid outlet in a low pressure region of at or near the tip of the fluidfoil, whereby fluid exiting the fluid outlet inserts instability into a tip vortex to disrupt or destroy the vortex.

This arrangement has the advantages of increasing the propulsive efficiency of the fluidfoil and reducing its acoustic signature.

The fluid outlet may be located on a suction side of the fluidfoil. The fluid inlet may be located towards the root of the fluidfoil or at substantially the same distance from the tip as the fluid outlet. The former provides centrifugal boost whilst the latter has higher pressure recovery due to the higher tip speed relative to the root speed.

The fluid inlet may be angled substantially in a chordal direction. It may also be angled in a spanwise direction. This guides the fluid flow past the fluidfoil into the fluid inlet. The fluid inlet may comprise a NACA duct.

The fluid outlet may comprise an aperture including vanes arranged to pre-swirl the fluid prior to exiting the fluid outlet. Alternatively the fluid outlet may comprise a plurality of apertures arranged to pre-swirl the fluid prior to exiting the fluid outlet. The fluid exiting the fluid outlet thus forms a vortex that disrupts the tip vortex or otherwise disrupts or destroys the tip vortex.

The fluid outlet may comprise a plurality of apertures arranged to create an air curtain to increase the span of the fluidfoil. Beneficially this causes the over tip flow to travel further in the spanwise direction and therefore weakens the tip vortex. Alternatively, the fluid outlet may comprise a plurality of apertures arranged to create an aerodynamic winglet at or near the tip of the fluidfoil. This causes relatively unstable fluid flows to be directed towards the tip vortex to insert instability therein, as well as increasing the aerodynamic span of the fluidfoil.

The fluidfoil may comprise an aerofoil or a hydrofoil.

The present invention provides a gas turbine engine, a propeller, a helicopter or a wind turbine comprising an arrangement as described above. Thus any application which comprises a fluidfoil may use the arrangement of the present invention with felicity.

The present invention will be more fully described by way of example with reference to the accompanying drawings, in which:
Figure 1 is a sectional side view of a gas turbine engine having contra-rotating propeller stages.
Figure 2 is a schematic drawing of fluid flow over a fluidfoil tip.
Figure 3 and Figure 4 are perspective sectional views of a fluidfoil according to the present invention having first and second embodiments of a fluid inlet.
Figure 5 is a sectional view of a fluidfoil according to the present invention showing fluid flow.
Figure 6 is a partial perspective view of a fluidfoil according to the present invention having the fluid inlet aligned with the fluid outlet.
Figure 7 shows four arrangements of the fluid outlet.

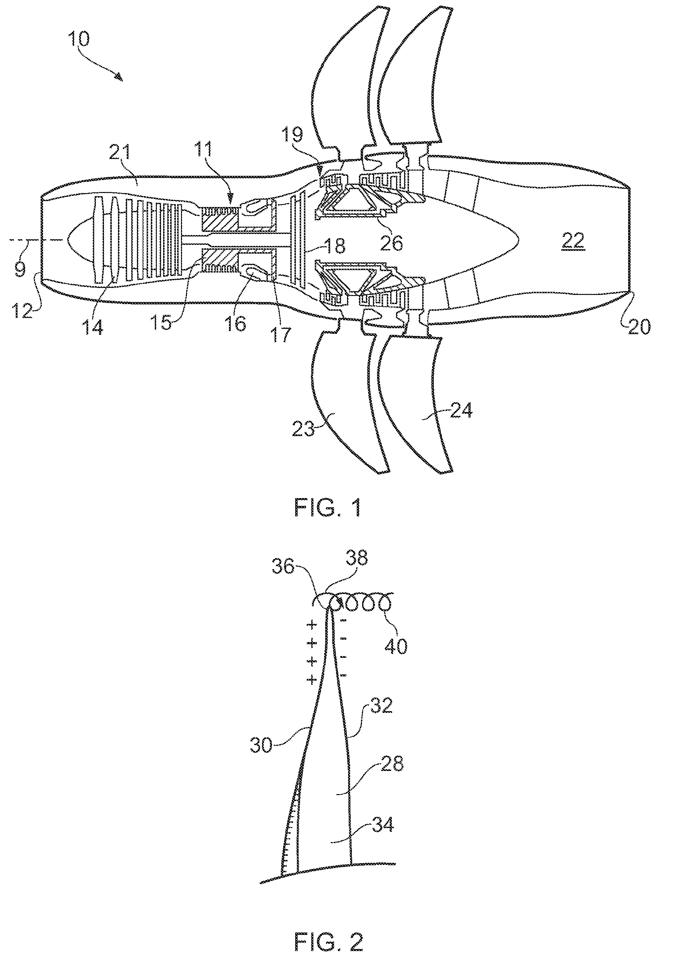

Referring to Figure 1, a twin-spooled, contra-rotating propeller gas turbine engine is generally indicated at 10 and has a principal rotational axis 9. The engine 10 comprises a core engine 11 having, in axial flow series, an air intake 12, an intermediate pressure compressor 14, a high-pressure compressor 15, combustion equipment 16, a high-pressure turbine 17, an intermediate pressure turbine 18, a free power (or low-pressure) turbine 19 and a core exhaust nozzle 20. A nacelle 21 generally surrounds the core engine 11 and defines the intake 12 and nozzle 20 and a core exhaust duct 22. The engine 10 also comprises two contra-rotating propeller stages 23, 24 attached to and driven by the free power turbine 19 via shaft 26.

The gas turbine engine 10 works in a conventional manner so that air entering the intake 12 is accelerated and compressed by the intermediate pressure compressor 14 and directed into the high-pressure compressor 15 where further compression takes place. The compressed air exhausted from the high-pressure compressor 15 is directed into the combustion equipment 16 where it is mixed with fuel and the mixture combusted. The resultant hot combustion products then expand through, and thereby drive the high-pressure, intermediate pressure and free power turbines 17, 18, 19 before being exhausted through the nozzle 20 to provide some propulsive thrust. The high-pressure, intermediate pressure and free power turbines 17, 18, 19 respectively drive the high and intermediate pressure compressors 15, 14 and the propellers 23, 24 by suitable interconnecting shafts. The propellers 23, 24 normally provide the majority of the propulsive thrust. In the embodiments herein described the propellers 23, 24 rotate in opposite senses so that one rotates clockwise and the other anti-clockwise around the engine's rotational axis 9.

Each propeller 23, 24 consists of a plurality of rotor blades 28, one of which is illustrated in Figure 2. The blade 28 has a pressure side 30 and a suction side 32 and extends spanwise from its root 34 to its tip 36. The roots 34 of a plurality of blades 28 are connected, by any suitable means known in the art, to a rotor hub to form the propeller 23, 24. In use, fluid flows over the tip 36 from the pressure side 30 to the suction side 32 of the blade 28, as indicated by arrow 38. This over tip fluid flow 38 causes tip vortices 40 to form, in a clockwise sense as illustrated, and be shed behind the blade 28 as the blade 28 travels through the fluid. Since the propellers 23, 24 rotate, the tip vortices 40 from each blade 28 actually describe a helical path.

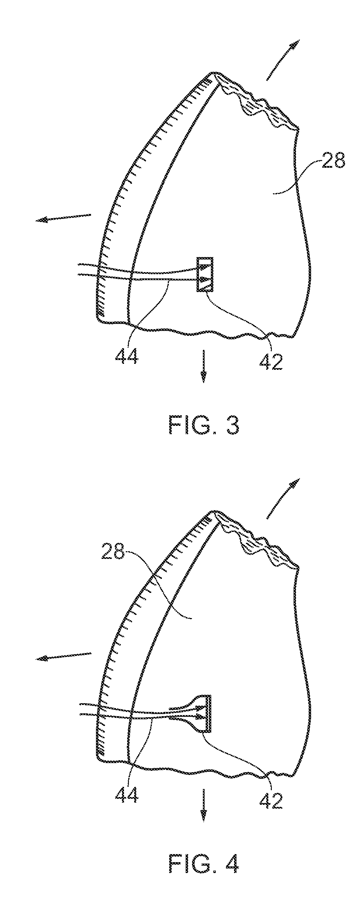

A first embodiment of a fluid inlet 42 of the present invention is shown in Figure 3. The fluid inlet 42 takes the form of a slot that is inclined into the fluidfoil 28 and generally aligned with the direction of fluid flow past the fluidfoil 28 such that fluid is diverted to flow into the fluid inlet 42, as shown by arrows 44. Thus the fluid inlet 42 is chordally angled. The fluid inlet 42 may also be angled in the spanwise direction so as to better capture the fluid flow migration from root 34 to tip 36 of the fluidfoil, blade 28. This arrangement of fluid inlet 42 is short and light. An alternative, second embodiment of a fluid inlet 42 is shown in Figure 4 and takes the form of a NACA duct or scoop. This has the conventional form wherein the inlet becomes progressively deeper and wider in the direction of inlet flow 44. This arrangement of fluid inlet 42 is longer and heavier than the inclined slot fluid inlet 42, but has a higher pressure recovery.

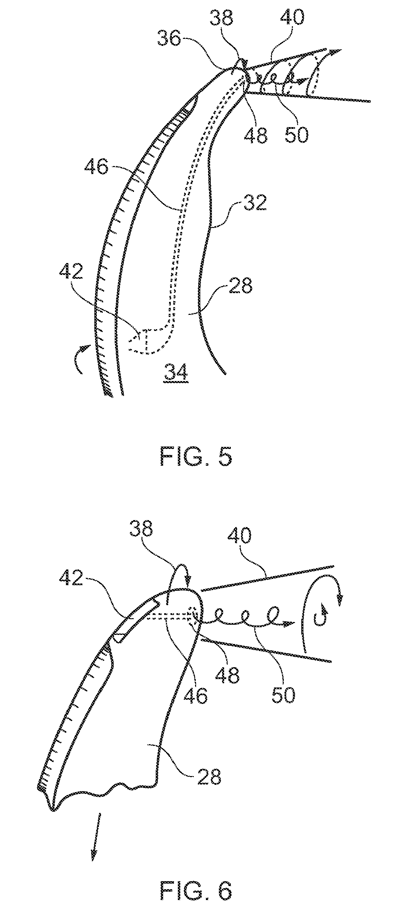

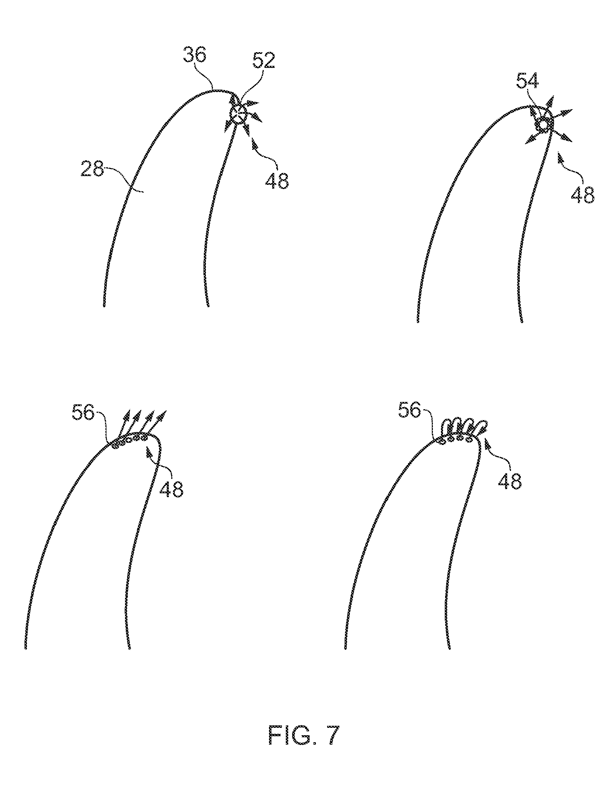

Figure 5 shows a blade 28 having a NACA duct fluid inlet 42, although it is to be understood that an inclined slot could be substituted without prejudice to the function of the invention. The fluid inlet 42 is located towards the root 34 of the blade 28. In the case of a propeller 23, 24 of a gas turbine engine 10 for aircraft propulsion, this position reduces the likelihood of ice forming around and blocking the fluid inlet 42 during flight. A duct 46 extends from the fluid inlet 42 through the interior of the blade 28. Preferably the duct 46 forms part of the structure of the blade 28 rather than being an additional component. A fluid outlet 48 is provided at the distal end of the duct 46 to the fluid inlet 42. The fluid outlet 48 is formed in a low pressure region of the suction side 32 of the blade 28, close to the tip 36. The fluid outlet 48 is arranged, as will be described in more detail with respect to Figure 7, to expel the fluid as an exit vortex 50. The exit vortex 50 may rotate in the opposite sense to the tip vortex 40, so as to disrupt that flow. Alternatively it may rotate in the same sense as the tip vortex 40 provided that it destabilises the tip vortex 40 and causes it to be disrupted or destroyed.

The arrangement of the present invention is passive since the rate of fluid egress from the fluid outlet 48 is determined by the rate of fluid flow over the blade 28 itself. This has advantages over an active system since it requires fewer components and does not require controlling. Furthermore, there are no moving parts in a passive system which reduces failure modes.

Figure 6 shows an alternative arrangement wherein the fluid inlet 42, shown as an inclined slot but which could be a NACA duct with equal felicity, is located towards the tip 36 of the fluidfoil, blade 28. This means that the duct 46 is short so there are minimal ducting losses. There is no boost effect from the centrifugal force inherent in having the fluid inlet 42 near to the root 34 and a duct 46 extending spanwise through the blade 28. However, this is balanced by the higher speed of the tip 36 relative to the root 34 providing a higher pressure recovery at the inlet 42 than in the inclined slot arrangement. The skilled reader will make a judgement of the optimal location of the fluid inlet 42, and consequent length of the duct 46, dependent on the precise application of the present invention.

Figure 7 gives four embodiments of the fluid outlet 48. In the first embodiment the fluid outlet 48 comprises a vaned aperture 52, that is an aperture having vanes extending therein. The vanes are arranged to pre-swirl the fluid exiting the fluid outlet 48 to promote formation of the exit vortex 50. In the second embodiment the fluid outlet 48 comprises a plurality of apertures 54 that are grouped and arranged to pre-swirl the fluid exiting the fluid outlet 48 to promote formation of the exit vortex 50 in a similar manner to the vaned aperture 52 of the first embodiment. As illustrated, the apertures 54 are arranged in a ring and each aperture 54 is angled to promote the pre-swirling of the fluid. However, other suitable arrangements of the apertures 54 may be contemplated and fall within the scope of this embodiment of the fluid outlet 48 of the present invention.

In the third and fourth embodiments the fluid outlet 48 is in the form of a plurality of radially, spanwise directed apertures 56. In the third embodiment the apertures 56 are arranged to direct the exiting fluid to form a curtain, which aerodynamically increases the span of the blade 28. This causes the over tip flow 38 to travel further in the spanwise direction and therefore weakens the tip vortex 40 subsequently formed. In the fourth embodiment the apertures 56 are angled so as to further weaken the tip vortex 40 by directing relatively unstable fluid flows at it thus acting as an aerodynamic winglet, whilst also increasing the aerodynamic span of the fluidfoil 28 somewhat.

There are many benefits and advantages to the arrangement of the present invention. The arrangement is passive so there are no moving parts and no need for a high pressure fluid feed. The duct 46 can be embedded within the fluidfoil 28, or be integrally formed therewith, providing increased reliability and mechanical robustness. The amount of fluid exiting the fluid outlet 48 increases proportionately with the increase in fluid flow over the fluidfoil 28, which causes an increase in over tip flow 38 and thus in the intensity of tip vortex 40 formation. Thus the arrangement is self-compensating since it is more effective at disrupting or destroying tip 40 vortices when the vortices 40 are more prone to form.

The structural efficiency of the blade 28 is not degraded by the introduction of stress raisers, apertures and the like, or by introducing significant mass moment at the tip 36. This is particularly the case when the fluid inlet 42 is located towards the root 34 of the blade 28 rather than towards the tip 36. This location of the fluid inlet 42 also reduces susceptibility of the arrangement to icing since this area of an aircraft aerofoil is less prone to icing. Additionally, it is easier to provide de-icing heat to the root 34 of a blade 28 than to duct it all the way to its tip 36.

By disrupting or destroying tip vortices 40 the acoustic signature of the blades 28 is reduced and the aero- or hydro-dynamic loads, through interaction with downstream blades 28, are reduced. This is particularly pertinent in the contra-rotating propeller gas turbine engine 10 application since the acoustic and aerodynamic load interaction between the front and rear propellers 23, 24 can be reduced.

By obviating the requirement for mechanical modifications to the fluidfoils 28, particularly to the tip 36, the parasitic losses associated with prior proposals are reduced or eliminated. Blade drag is reduced by the arrangement of the present invention so that system propulsive efficiency is enhanced.

The arrangement of the present invention finds utility for a variety of fluidfoils 28 in a variety of applications and technical fields. For example, aircraft wings, gas turbine engine aerofoils such as fan and compressor blades, propeller blades including for contra-rotating propellers, helicopter propeller blades including for contra-rotating propellers, wind turbine aerofoils, marine turbine hydrofoils and other hydrofoils such as stabilising fins for ships.

## Claims

1. A fluidfoil tip vortex disruption arrangement for a fluidfoil (28) having a pressure side (30), a suction side (32), a tip (36) and a root (34); the disruption arrangement comprising a fluid inlet (42) on a pressure side (30) of the fluidfoil (28); and a fluid outlet (48) in a low pressure region at or near the tip (36) of the fluidfoil (28), the fluid inlet (42) coupled to the fluid outlet (48), whereby fluid exiting the fluid outlet (48) during use of the fluidfoil (28) inserts instability into a tip vortex (40) to disrupt or destroy the vortex.

2. A disruption arrangement as claimed in claim 1 wherein the fluid outlet (48) is located on a suction side (32) of the fluidfoil (28).

3. A disruption arrangement as claimed in claim 1 or claim 2 wherein the fluid inlet (42) is located towards the root (34) of the fluidfoil (28).

4. A disruption arrangement as claimed in claim 1 or claim 2 wherein the fluid inlet (42) is located at substantially the same distance from the tip (36) as the fluid outlet (48).

5. A disruption arrangement as claimed in any of claims 1 to 4 wherein the fluid inlet (42) is angled substantially in a chordal direction of the fluidfoil (28).

6. A disruption arrangement as claimed in any of claims 1 to 4 wherein the fluid inlet (42) comprises a NACA duct.

7. A disruption arrangement as claimed in any of claims 1 to 6 wherein the fluid outlet (48) comprises an aperture (52) including vanes arranged to pre-swirl the fluid prior to exiting the fluid outlet (48).

8. A disruption arrangement as claimed in any of claims 1 to 6 wherein the fluid outlet (48) comprises a plurality of apertures (54) arranged to pre-swirl the fluid prior to exiting the fluid outlet (48).

9. A disruption arrangement as claimed in any of claims 1 to 6 wherein the fluid outlet (48) comprises a plurality of apertures (56) arranged to create an air curtain to increase the span of the fluidfoil (28).

10. A disruption arrangement as claimed in any of claims 1 to 6 wherein the fluid outlet (48) comprises a plurality of apertures (56) arranged to create an aerodynamic winglet at or near the tip (36) of the fluidfoil (28).

11. A disruption arrangement as claimed in any of claims 1 to 9 wherein the fluidfoil (28) comprises an aerofoil.

12. A disruption arrangement as claimed in any of claims 1 to 9 wherein the fluidfoil (28) comprises a hydrofoil.

13. A gas turbine engine (10) comprising an arrangement as claimed in any of claims 1 to 11.

14. A propeller comprising an arrangement as claimed in any of claims 1 to 11.

15. A helicopter comprising an arrangement as claimed in any of claims 1 to 11.

16. A wind turbine comprising an arrangement as claimed in any of claims 1 to 11.
